# EUROPEAN PATENT APPLICATION

(11) **EP 4 047 752 A1**
(43) Date of publication of application: **24.08.2022**
(21) Application number: 20884389.6
(22) Date of filing: 22.10.2020
(51) Int. Cl.: H01Q 13/20

(54) **ANTENNA STRUCTURE, RADAR AND TERMINAL**

(30) Priority: 06.11.2019 CN 201911078485
(71) Applicant: Huawei Technologies Co., Ltd., Shenzhen, Guangdong 518129 (CN)
(72) Inventor: HE, Kai, Shenzhen, Guangdong 518129 (CN); YE, Wei, Shenzhen, Guangdong 518129 (CN); YU, Guangwei, Shenzhen, Guangdong 518129 (CN); YUAN, Shutian, Shenzhen, Guangdong 518129 (CN)
(74) Representative: Grünecker Patent- und Rechtsanwälte PartG mbB
(86) International application number: PCT/CN2020/122765
(87) International publication number: WO 2021/088651

(57) **Abstract**

This application pertains to the field of sensors, and in particular, relates to a millimeter-wave radar, for example, a 77 GHz millimeter-wave radar, and provides an antenna structure, a radar, and a terminal, so that an operating bandwidth of an antenna can be extended. The solution in this application may be used for precision detection and distance detection in the field of autonomous driving or intelligent driving. The antenna structure includes a power division unit, a first antenna bay, and a second antenna bay. The first antenna bay is connected to a first output end of the power division unit, and the second antenna bay is connected to a second output end of the power division unit. The first antenna bay includes at least one first patch provided with a slot and at least one second patch provided with a slot, and the second antenna bay includes at least one third patch provided with a slot and at least one fourth patch provided with a slot. The slots on the at least one first patch and the at least one second patch are in opposite directions, and the slots on the at least one third patch and the at least one fourth patch are in opposite directions.

## Description

This application claims priority to Chinese Patent Application No. 201911078485.5, filed on November 6, 2019 and entitled "ANTENNA STRUCTURE, RADAR, AND TERMINAL", which is incorporated herein by reference in its entirety.

### TECHNICAL FIELD

This application relates to the field of sensor technologies, and more specifically, to an antenna structure, a radar, and a terminal in the field of sensor technologies.

### BACKGROUND

With development of society and progress of science and technology, intelligent vehicles are gradually entering the daily life of people. A sensor plays a very important role in self driving and intelligent driving of intelligent vehicles. The sensor may be a millimeter-wave radar, a laser radar, an ultrasonic radar, a camera, or the like. For example, as a key sensor in the self driving technology, a 77 GHz millimeter-wave radar is featured in a short wavelength, a small device size, and the like. The 77 GHz millimeter-wave radar has irreplaceable advantages in terms of detection precision, a detection distance, and device integration.

An antenna is a signal transceiver apparatus located at the front end of a radio frequency system. Performance of the antenna directly determines overall performance of a millimeter-wave radar, and the performance of the antenna is usually evaluated by using an operating bandwidth, a beam direction deflection range, a gain, and the like.

Therefore, how to design an antenna that can extend an operating bandwidth to meet higher requirements of people for self driving and intelligent driving experience becomes a research focus of researchers.

### SUMMARY

Embodiments of this application provide an antenna structure, a radar, and a terminal, so that an operating bandwidth of an antenna can be extended.

According to a first aspect, an embodiment of this application provides an antenna structure. The antenna structure includes a power division unit, a first antenna bay, and a second antenna bay. The first antenna bay is connected to a first output end of the power division unit, and the second antenna bay is connected to a second output end of the power division unit.

The first antenna bay includes at least one first patch provided with a slot and at least one second patch provided with a slot, and the second antenna bay includes at least one third patch provided with a slot and at least one fourth patch provided with a slot, where the slots on the at least one first patch and the at least one second patch are in opposite directions, and the slots on the at least one third patch and the at least one fourth patch are in opposite directions.

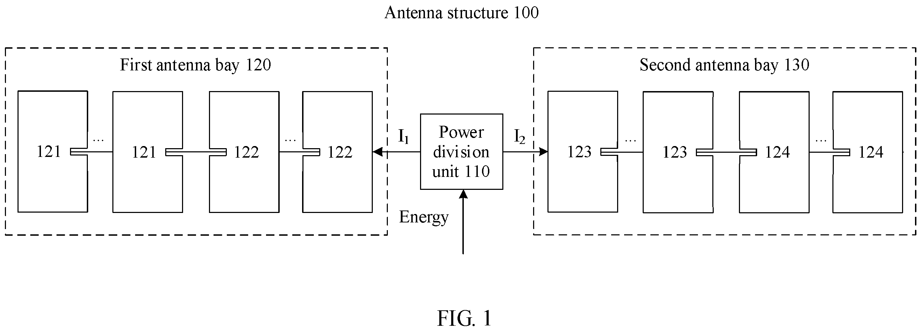

It should be noted that the power division unit is configured to convert input energy into two equal-amplitude reverse (180-degree phase difference) feeding currents. A current direction is shown in FIG. 1. A first feeding current I₁ is input into a first antenna bay 120, and a second feeding current I₂ is input into a second antenna bay 130, to ensure that the antenna structure has a stable beam direction.

Optionally, the power division unit may be a power division feeder, or another device that can implement an equal-amplitude reverse feeding function. This is not limited in this embodiment of this application.

It should be further noted that, in the first antenna bay 120, at least one first patch 121 may be configured to radiate energy based on input I₁, and at least one second patch 122 may be used as a load in a circuit in which I₁ is located to adjust a matching resistor. Similarly, in the second antenna bay 130, at least one third patch 123 may be configured to radiate energy based on input I₂, and at least one fourth patch 124 may be used as a load in a circuit in which I₂ is located to adjust a matching resistor.

It should be further noted that, in this embodiment of this application, patches may be connected together through a first microstrip and a slot; and the power division unit may be connected to the first antenna bay through a second microstrip, and the power division unit may be connected to the second antenna bay through a second microstrip.

Optionally, impedance of the first microstrip and impedance of the second microstrip may be the same or may be different. This is not limited in this embodiment of this application.

For example, the first microstrip and the second microstrip may be microstrips with impedance of 50 ohms.

In a possible implementation, a quantity of the at least one first patch is the same as a quantity of the at least one fourth patch, a quantity of the at least one second patch is the same as a quantity of the at least one third patch, and the at least one first patch, the at least one second patch, the at least one third patch, and the at least one fourth patch are arranged in a straight line.

Optionally, a quantity of the at least one first patch may be the same as a quantity of the at least one fourth patch, and a quantity of the at least one second patch may be the same as a quantity of the at least one third patch.

In a possible implementation, there may be one first patch and one fourth patch, and there may be a plurality of second patches and a plurality of third patches. In other words, in each antenna bay, there is one load patch, and there are a plurality of radiation patches.

Optionally, patches (the at least one first patch and the at least one second patch) in the first antenna bay and the power division unit may be arranged in a first straight line, and patches (the at least one third patch and the at least one fourth patch) in the second antenna bay and the power division unit may be arranged in a second straight line. There is an included angle between the first straight line and the second straight line, and the included angle may be greater than a first angle threshold and less than or equal to a second angle threshold.

In a possible implementation, the at least one first patch is at least one patch that is in the first antenna bay and that is farthest from the power division unit, and the at least one fourth patch is at least one patch that is in the second antenna bay and that is farthest from the power division unit.

In a possible implementation, the slot on the at least one first patch is disposed at an edge facing a side of the power division unit, and the slot on the at least one fourth patch is disposed at an edge facing a side of the power division unit.

In other words, that the slots on the at least one first patch and the at least one second patch are in opposite directions may mean that the slot on the at least one first patch is disposed at the edge facing the side of the power division unit, and the slot on the at least one second patch is disposed at an edge away from the side of the power division unit. Correspondingly, that the slots on the at least one third patch and the at least one fourth patch are in opposite directions may mean that the slot on the at least one fourth patch is disposed at the edge facing the side of the power division unit, and the slot on the at least one third patch is disposed at an edge away from the side of the power division unit.

According to the antenna structure provided in this embodiment of this application, the slots on the at least one first patch and the at least one second patch are in opposite directions, so that the at least one first patch can be used as a radiation patch to radiate energy, and the at least one second patch can be used as a load patch to adjust a matching resistor. The slots on the at least one third patch and the at least one fourth patch are in opposite directions, so that the at least one third patch can be used as a radiation patch to radiate energy, and the at least one fourth patch can be used as a load patch to adjust a matching resistor. Therefore, an operating bandwidth of an antenna can be extended.

According to the antenna structure provided in this embodiment of this application, the operating bandwidth of the antenna can be extended to 2.62 GHz.

In a possible implementation, the slot on the at least one first patch is disposed at a middle location at the edge facing the side of the power division unit, and the slot on the at least one fourth patch is disposed at a middle location at the edge away from the side of the power division unit.

Optionally, each of the slots on the at least one first patch and the fourth patch may be disposed at another location at an edge facing a side of the power division unit, and each of the slots on the at least one second patch and the at least one third patch is disposed at another location at an edge away from a side of the power division unit.

Optionally, the another location may be understood as an area above a middle location at the edge, an area below a middle location at the edge, or the like. This is not limited in this embodiment of this application.

In a possible implementation, surface shapes of the slots on the at least one first patch, the at least one second patch, the at least one third patch, and the at least one fourth patch are rectangles.

In a possible implementation, sizes of the at least one first patch, the at least one second patch, the at least one third patch, and the at least one fourth patch are the same.

It should be noted that in this embodiment of this application, that sizes are the same includes that the sizes are exactly the same and are approximately the same. That the sizes are approximately the same means that a difference between sizes of patches is within a specific error range.

It should be further noted that the error range in this embodiment of this application includes an error that may exist in industrial manufacturing, an error that is allowed in a structure design, or the like. The error range is not specifically limited herein.

In a possible implementation, distances between patches in each of the first antenna bay and the second antenna bay are the same.

It should be noted that in this embodiment of this application, that distances are the same includes that the distances are exactly the same and are approximately the same. That the distances are approximately the same means that a difference between distances between patches is within a specific error range.

According to the antenna structure provided in this embodiment of this application, the first antenna bay and the second antenna bay include a same total quantity of patches, sizes of the patches are the same, and distances between the patches are the same. The first antenna bay and the second antenna bay include a same quantity of patches that implement different functions (a load function and a radiation function), locations of the patches are symmetric, and slots on the patches are in symmetric directions. This can reduce processing and implementation difficulties.

In addition, the first antenna bay and the second antenna bay are approximately symmetrically disposed on two sides of the power division unit. This may mean that the first antenna bay and the second antenna bay are disposed in parallel, and patches in the first antenna bay and the second antenna bay are disposed in series. A serial-parallel hybrid feeding structure is used, to avoid a problem that an antenna beam direction deflects with a frequency and a side lobe level (side lobe level, SLL) deteriorates with a frequency.

According to the antenna structure provided in this embodiment of this application, a beam direction deflection range of + 0.1°, an E-plane SLL that is less than -15 dB, and a bandwidth of 2.2 GHz (ranging from 76.9 GHz to 79.1 GHz) can be implemented.

In a possible implementation, the antenna structure is a receive antenna or a transmit antenna.

According to a second aspect, an embodiment of this application provides a radar. The radar includes the antenna structure according to any one of the first aspect or the possible implementations of the first aspect.

In a possible implementation, the radar further includes a control chip, the control chip is connected to an input end of the power division unit, and the control chip is configured to control the antenna structure to transmit or receive a signal.

In a possible implementation, the radar further includes a dielectric substrate, and the power division unit, the first antenna bay, the second antenna bay, and the control chip are disposed on a same surface of the dielectric substrate.

In a possible implementation, the radar further includes a dielectric substrate, the power division unit, the first antenna bay, and the second antenna bay are disposed on a first surface of the dielectric substrate, the control chip is disposed on a second surface of the dielectric substrate, and the first surface is disposed opposite to the second surface.

Optionally, the power division unit on the first surface of the dielectric substrate may be connected, in a plurality of manners, to the control chip disposed on the second surface of the dielectric substrate. This is not limited in this embodiment of this application.

In a possible implementation, a through hole may be disposed on the dielectric substrate. The control chip is connected to the power division unit through a third microstrip and the through hole.

In another possible implementation, in the through hole, a conductor may be formed by casting a conductive solution. The control chip is connected, through a third microstrip, to a surface of the conductor on the first surface of the dielectric substrate, and the power division unit is connected, through a fourth microstrip, to a surface of the conductor on the second surface of the dielectric substrate. In this way, the control chip is connected to the power division unit.

According to a third aspect, an embodiment of this application further provides a terminal. The terminal includes the antenna structure according to the second aspect or the possible implementations of the second aspect.

According to a fourth aspect, an embodiment of this application further provides an antenna structure preparation method, and the method includes:
printing a power division unit, a first antenna bay, and a second antenna bay on a dielectric substrate, where the first antenna bay is connected to a first output end of the power division unit, the second antenna bay is connected to a second output end of the power division unit, the first antenna bay includes at least one first patch and at least one second patch, and the second antenna bay includes at least one third patch and at least one fourth patch; and
making a slot on each of the at least one first patch, the at least one second patch, the at least one third patch, and the at least one fourth patch, where the slots on the at least one first patch and the at least one second patch are in opposite directions, and the slots on the at least one third patch and the at least one fourth patch are in opposite directions.

In a possible implementation, the dielectric substrate is a multilayer hybrid board, and the printing a power division unit, a first antenna bay, and a second antenna bay on a dielectric substrate includes: printing the power division unit, the first antenna bay, and the second antenna bay on a top layer of the dielectric substrate.

Optionally, that the dielectric substrate is a multilayer hybrid board may mean that the dielectric substrate includes a multilayer board, where a top layer of the multilayer board is made of a metal material.

In a possible implementation, a quantity of the at least one first patch is the same as a quantity of the at least one fourth patch, a quantity of the at least one second patch is the same as a quantity of the at least one third patch, and the at least one first patch, the at least one second patch, the at least one third patch, and the at least one fourth patch are arranged in a straight line.

Optionally, a quantity of the at least one first patch may be the same as a quantity of the at least one fourth patch, and a quantity of the at least one second patch may be the same as a quantity of the at least one third patch.

In a possible implementation, there may be one first patch and one fourth patch, and there may be a plurality of second patches and a plurality of third patches. In other words, in each antenna bay, there is one load patch, and there are a plurality of radiation patches.

Optionally, patches (the at least one first patch and the at least one second patch) in the first antenna bay and the power division unit may be arranged in a first straight line, and patches (the at least one third patch and the at least one fourth patch) in the second antenna bay and the power division unit may be arranged in a second straight line. There is an included angle between the first straight line and the second straight line, and the included angle may be greater than a first angle threshold and less than or equal to a second angle threshold.

In a possible implementation, the at least one first patch is at least one patch that is in the first antenna bay and that is farthest from the power division unit, and the at least one fourth patch is at least one patch that is in the second antenna bay and that is farthest from the power division unit.

In a possible implementation, the making a slot on each of the at least one first patch, the at least one second patch, the at least one third patch, and the at least one fourth patch includes: making a slot at an edge that faces a side of the power division unit and that is of each of the at least one first patch and the at least one third patch, and making a slot at an edge that is away from a side of the power division unit and that is of each of the at least one second patch and the at least one fourth patch.

In a possible implementation, the making a slot at an edge that faces a side of the power division unit and that is of each of the at least one first patch and the at least one third patch includes: making the slot at a middle location at the edge that faces the side of the power division unit and that is of each of the at least one first patch and the at least one third patch.

In a possible implementation, the making a slot at an edge that is away from a side of the power division unit and that is of each of the at least one second patch and the at least one fourth patch includes: making the slot at a middle location at the edge that is away from the side of the power division unit and that is of each of the at least one second patch and the at least one fourth patch.

In a possible implementation, surface shapes of the slots on the at least one first patch, the at least one second patch, the at least one third patch, and the at least one fourth patch are rectangles.

In a possible implementation, sizes of the at least one first patch, the at least one second patch, the at least one third patch, and the at least one fourth patch are the same.

It should be noted that in this embodiment of this application, that sizes are the same includes that the sizes are exactly the same and are approximately the same. That the sizes are approximately the same means that a difference between sizes of patches is within a specific error range.

In a possible implementation, distances between patches in each of the first antenna bay and the second antenna bay are the same.

It should be noted that in this embodiment of this application, that distances are the same includes that the distances are exactly the same and are approximately the same. That the distances are approximately the same means that a difference between distances between patches is within a specific error range.

According to the antenna structure provided in embodiments of this application, the first antenna bay and the second antenna bay include a same total quantity of patches, sizes of the patches are the same, and distances between the patches are the same. The first antenna bay and the second antenna bay include a same quantity of patches that implement different functions (a load function and a radiation function), locations of the patches are symmetric, and slots on the patches are in symmetric directions. This can reduce processing and implementation difficulties.

In addition, the first antenna bay and the second antenna bay are approximately symmetrically disposed on two sides of the power division unit. This may mean that the first antenna bay and the second antenna bay are disposed in parallel, and patches in the first antenna bay and the second antenna bay are disposed in series. A serial-parallel hybrid feeding structure is used, to avoid a problem that an antenna beam direction deflects with a frequency and a side lobe level (side lobe level, SLL) deteriorates with a frequency.

### BRIEF DESCRIPTION OF DRAWINGS

FIG. 1 is a schematic diagram of a structure of an antenna structure 100 according to an embodiment of this application;
FIG. 2 is another schematic diagram of a structure of an antenna structure 100 according to an embodiment of this application;
FIG. 3 is still another schematic diagram of a structure of an antenna structure 100 according to an embodiment of this application;
FIG. 4 is yet another schematic diagram of a structure of an antenna structure 100 according to an embodiment of this application;
FIG. 5 is a schematic diagram of a structure of an antenna structure 200 according to an embodiment of this application;
FIG. 6 is a schematic diagram of a structure of a radar 300 according to an embodiment of this application;
FIG. 7 is another schematic diagram of a structure of a radar 300 according to an embodiment of this application;
FIG. 8 is still another schematic diagram of a structure of a radar 300 according to an embodiment of this application;
FIG. 9 is a schematic diagram of a structure of a terminal 400 according to an embodiment of this application; and
FIG. 10 is a schematic flowchart of an antenna structure preparation method 500 according to an embodiment of this application.

### DESCRIPTION OF EMBODIMENTS

The following describes the technical solutions in embodiments of this application with reference to the accompanying drawings in embodiments of this application.

FIG. 1 is a schematic diagram of a structure of an antenna structure 100 according to an embodiment of this application.

As shown in FIG. 1, the antenna structure 100 may include a power division unit 110, a first antenna bay 120, and a second antenna bay 130. The first antenna bay 120 is connected to a first output end of the power division unit 110, and the second antenna bay 130 is connected to a second output end of the power division unit 110. The first antenna bay 120 includes at least one first patch 121 provided with a slot and at least one second patch 122 provided with a slot, and the second antenna bay 300 includes at least one third patch 123 provided with a slot and at least one fourth patch 124 provided with a slot. The slots on the at least one first patch 121 and the at least one second patch 122 are in opposite directions, and the slots on the at least one third patch 123 and the at least one fourth patch 124 are in opposite directions.

It should be noted that the power division unit 110 is configured to convert input energy into two equal-amplitude reverse (180-degree phase difference) feeding currents. A current direction is shown in FIG. 1. A first feeding current I₁ is input into the first antenna bay 120, and a second feeding current I₂ is input into the second antenna bay 130, to ensure that the antenna structure has a stable beam direction.

Optionally, the power division unit 110 may be a power division feeder, or another device that can implement an equal-amplitude reverse feeding function. This is not limited in this embodiment of this application.

It should be further noted that, in the first antenna bay 120, the at least one first patch 121 may be configured to radiate energy based on input I₁, and the at least one second patch 122 may be used as a load in a circuit in which I₁ is located to adjust a matching resistor. Similarly, in the second antenna bay 130, the at least one third patch 123 may be configured to radiate energy based on input I₂, and the at least one fourth patch 124 may be used as a load in a circuit in which I₂ is located to adjust a matching resistor.

It should be further noted that, in this embodiment of this application, patches may be connected together through a first microstrip and a slot. The power division unit 110 may be connected to the first antenna bay 120 through a second microstrip, and the power division unit 110 may be connected to the second antenna bay 130 through a second microstrip.

Optionally, impedance of the first microstrip and impedance of the second microstrip may be the same or may be different. This is not limited in this embodiment of this application.

For example, the first microstrip and the second microstrip may be microstrips with impedance of 50 ohms.

In a possible implementation, the at least one first patch may be disposed at a location that is in the first antenna bay and that is farthest from the power division unit and used as a load, and the at least one second patch may be disposed at a locationbetween the at least one first patch and the power division unit to implement energy radiation. Correspondingly, the at least one fourth patch may be disposed at a location that is in the second antenna bay and that is farthest from the power division unit and used as a load, and the at least one third patch may be disposed at a location between the at least one fourth patch and the power division unit to implement energy radiation.

Optionally, a quantity of the at least one first patch 121 may be the same as a quantity of the at least one fourth patch 124, and a quantity of the at least one second patch 122 may be the same as a quantity of the at least one third patch 123.

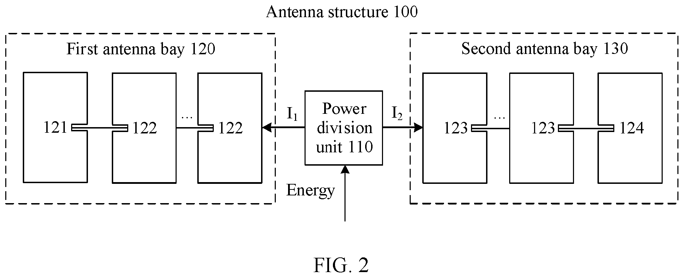

In a possible implementation, as shown in FIG. 2, there may be one first patch 121 and one fourth patch 124, and there may be a plurality of second patches 122 and a plurality of third patches 123. In other words, in each antenna bay, there is one load patch, and there are a plurality of radiation patches.

For example, the first antenna bay may include one first patch and four second patches, and the second antenna bay may include four third patches and one fourth patch.

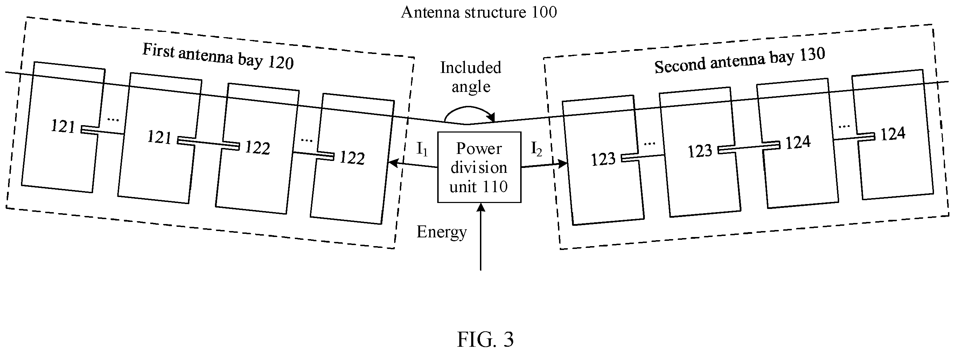

Optionally, as shown in FIG. 3, patches (the at least one first patch and the at least one second patch) in the first antenna bay and the power division unit may be arranged in a first straight line, and patches (the at least one third patch and the at least one fourth patch) in the second antenna bay and the power division unit may be arranged in a second straight line. There is an included angle between the first straight line and the second straight line, and the included angle may be greater than a first angle threshold and less than or equal to a second angle threshold.

For example, a value range of the included angle may be (150, 180].

In a possible implementation, the included angle may be 180°, that is, the first straight line and the second straight line may be a same straight line. In other words, the at least one first patch 121, the at least one second patch 122, the at least one third patch 123, the at least one fourth patch 124, and the power division unit 110 are arranged in a straight line.

It should be noted that, that the slots on the at least one first patch 121 and the at least one second patch 122 are in opposite directions may mean that the slot on the at least one first patch 121 is disposed at an edge facing a side of the power division unit 110, and the slot on the at least one second patch 122 is disposed at an edge away from the side of the power division unit 110. Correspondingly, that the slots on the at least one third patch 123 and the at least one fourth patch 124 are in opposite directions may mean that the slot on the at least one fourth patch 124 is disposed at an edge facing a side of the power division unit 110, and the slot on the at least one third patch 123 is disposed at an edge away from the side of the power division unit 110.

According to the antenna structure provided in this embodiment of this application, the slots on the at least one first patch and the at least one second patch are in opposite directions, so that the at least one first patch can be used as a radiation patch to radiate energy, and the at least one second patch can be used as a load patch to adjust a matching resistor. The slots on the at least one third patch and the at least one fourth patch are in opposite directions, so that the at least one third patch can be used as a radiation patch to radiate energy, and the at least one fourth patch can be used as a load patch to adjust a matching resistor. Therefore, an operating bandwidth of an antenna can be extended.

According to the antenna structure provided in this embodiment of this application, the operating bandwidth of the antenna can be extended to 2.62 GHz.

In a possible implementation, as shown in FIG. 1 to FIG. 3, each of the slots on the at least one first patch 121 and the at least one fourth patch 124 may be disposed at a middle location at the edge facing the side of the power division unit 110, and each of the slots on the at least one second patch 122 and the at least one third patch 123 is disposed at a middle location at the edge away from the side of the power division unit 110.

Optionally, each of the slots on the at least one first patch 121 and the at least one fourth patch 124 may be disposed at another location at the edge facing the side of the power division unit 110, and each of the slots on the at least one second patch 122 and the at least one third patch 123 is disposed at another location at the edge away from the side of the power division unit 110.

Optionally, the another location may be understood as an area above a middle location at the edge, an area below a middle location at the edge, or the like. This is not limited in this embodiment of this application.

In a possible implementation, as shown in FIG. 1 to FIG. 3, surface shapes of the slots on the at least one first patch 121, the at least one second patch 122, the at least one third patch 123, and the at least one fourth patch 124 may be rectangles.

Optionally, surface shapes of the slots on the at least one first patch, the at least one second patch, the at least one third patch, and the at least one fourth patch may alternatively be another shape such as a triangle or a circle. This is not limited in this embodiment of this application.

In a possible implementation, as shown in FIG. 1 to FIG. 3, sizes of the at least one first patch, the at least one second patch, the at least one third patch, and the at least one fourth patch may be the same.

It should be noted that in this embodiment of this application, that sizes are the same includes that the sizes are exactly the same and are approximately the same. That the sizes are approximately the same means that a difference between sizes of patches is within a specific error range.

It should be further noted that the error range in this embodiment of this application includes an error that may exist in industrial manufacturing, an error that is allowed in a structure design, or the like. The error range is not specifically limited herein.

Optionally, the sizes of the at least one first patch, the at least one second patch, the at least one third patch, and the at least one fourth patch may alternatively be different. This is not limited in this embodiment of this application.

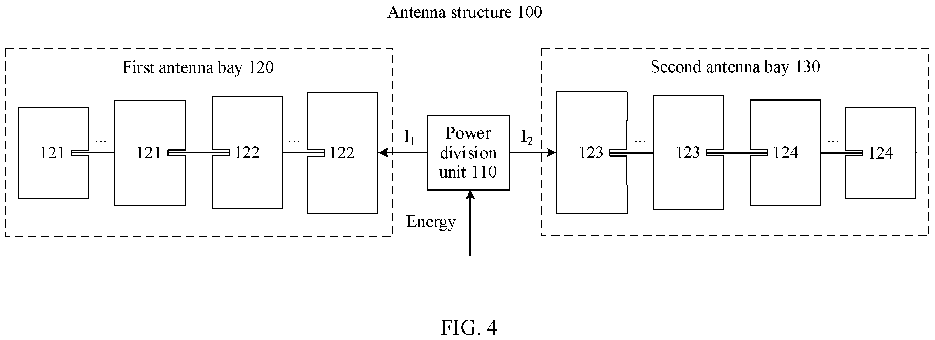

For example, FIG. 4 is a possible schematic diagram of a structure in which sizes of the at least one first patch, the at least one second patch, the at least one third patch, and the at least one fourth patch are different.

In a possible implementation, as shown in FIG. 1 to FIG. 4, distances between patches in each of the first antenna bay and the second antenna bay are the same.

It should be noted that in this embodiment of this application, that distances are the same includes that the distances are exactly the same and are approximately the same. That the distances are approximately the same means that a difference between distances between patches is within a specific error range.

Optionally, the distances between the patches in each of the first antenna bay and the second antenna bay may alternatively be different. This is not limited in this embodiment of this application.

According to the antenna structure provided in this embodiment of this application, the first antenna bay and the second antenna bay include a same total quantity of patches, sizes of the patches are the same, and distances between the patches are the same. The first antenna bay and the second antenna bay include a same quantity of patches that implement different functions (a load function and a radiation function), locations of the patches are symmetric, and slots on the patches are in symmetric directions. This can reduce processing and implementation difficulties.

In addition, the first antenna bay and the second antenna bay are approximately symmetrically disposed on two sides of the power division unit. This may mean that the first antenna bay and the second antenna bay are disposed in parallel, and patches in the first antenna bay and the second antenna bay are disposed in series. A serial-parallel hybrid feeding structure is used, to avoid a problem that an antenna beam direction deflects with a frequency and a side lobe level (side lobe level, SLL) deteriorates with a frequency.

According to the antenna structure provided in this embodiment of this application, a beam direction deflection range of + 0.1°, an E-plane SLL that is less than -15 dB, and a bandwidth of 2.2 GHz (ranging from 76.9 GHz to 79.1 GHz) can be implemented.

Optionally, the antenna structure 100 may be a receive antenna or a transmit antenna. This is not limited in this embodiment of this application.

It should be noted that, in this application, only an example in which the antenna structure 100 is a transmit antenna is used to describe the antenna structure 100. However, this embodiment of this application is not limited thereto.

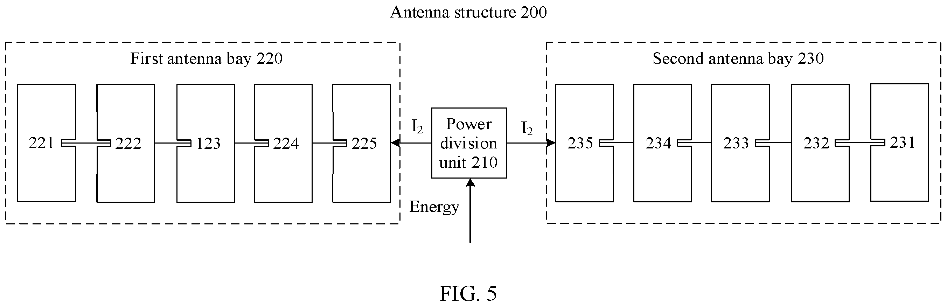

FIG. 5 is a schematic diagram of a structure of an antenna structure 200 according to an embodiment of this application. As shown in FIG. 5, the antenna structure 200 includes a power division unit 210, a first antenna bay 220, and a second antenna bay 230. The first antenna bay 220 is connected to a first output end of the power division unit 210, and the second antenna bay 230 is connected to a second output end of the power division unit 210. The first antenna bay 220 includes patches 221 to 225, and the second antenna bay includes patches 231 to 235. The patches in the first antenna bay 220, the power division unit 220, and the patches in the second antenna bay 230 are arranged in a straight line, and the second antenna bay 220 and the third antenna bay 230 are symmetrically disposed on two sides of the power division unit.

A rectangular slot is disposed at an input end of the patch 221 in the first antenna bay 220, and a rectangular slot is disposed at an output end of each of the patches 222 to 225. A rectangular slot is disposed at an input end of the patch 231 in the second antenna bay 230, and a rectangular slot is disposed at an output end of each of the patches 232 to 235.

It should be noted that in this embodiment of this application, the input end is an end that is of a patch and into which a current is input based on a current direction, and the output end is an end that is of a patch and from which a current is output based on a current direction.

In addition, sizes of the patches 221 to 225 in the first antenna bay 220 and the patches 231 to 235 in the second antenna bay 230 are the same, and distances between any two patches in each of the first antenna bay 220 and the second antenna bay 230 are also the same.

According to the antenna structure provided in this embodiment of this application, a beam direction deflection range of + 0.1°, an E-plane SLL that is less than -15 dB, and a bandwidth of 2.2 GHz (ranging from 76.9 GHz to 79.1 GHz) can be implemented.

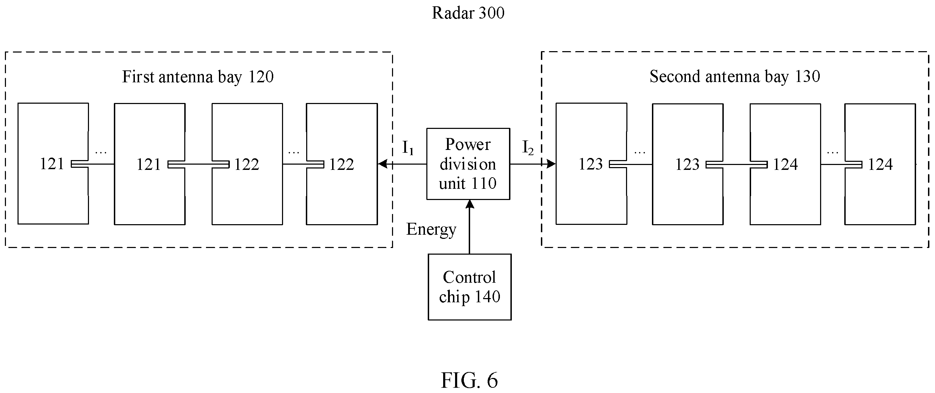

FIG. 6 is a schematic diagram of a structure of a radar 300 according to an embodiment of this application. The radar 300 includes the antenna structure 100 shown in FIG. 1 and a control chip 140. The control chip 140 is connected to an input end of the power division unit 110, and the control chip 140 is configured to control the antenna structure 100 to receive and send a signal.

It should be noted that the control chip 140 may be connected to the power division unit 110 through a third microstrip.

Optionally, impedance of the third microstrip may be the same as or different from the impedance of the first microstrip and the impedance of the second microstrip. This is not limited in this embodiment of this application.

Optionally, the antenna structure further includes a dielectric substrate. The power division unit 110, the first antenna bay 120, the second antenna bay 130, and the control chip 140 are disposed on a same surface or different surfaces of the dielectric substrate. This is not limited in this embodiment of this application.

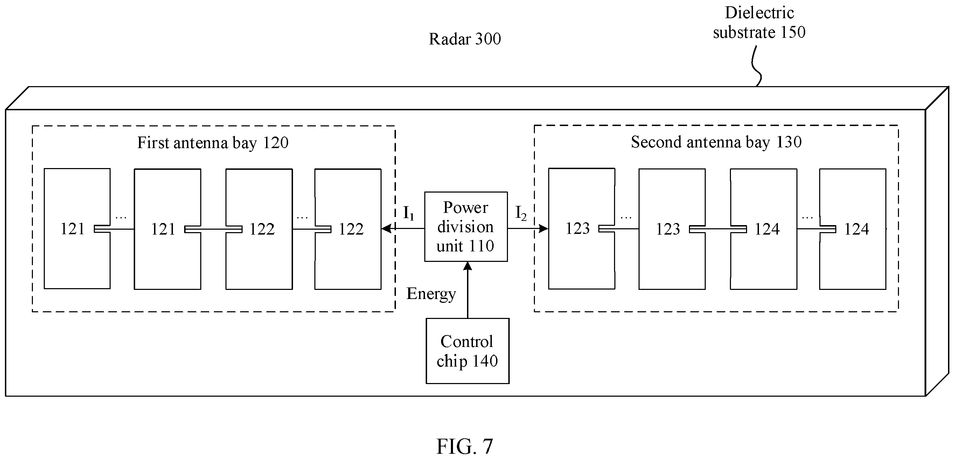

In a possible implementation, as shown in FIG. 7, the power division unit 110, the first antenna bay 120, the second antenna bay 130, and the control chip 140 are disposed on a same surface of the dielectric substrate 150.

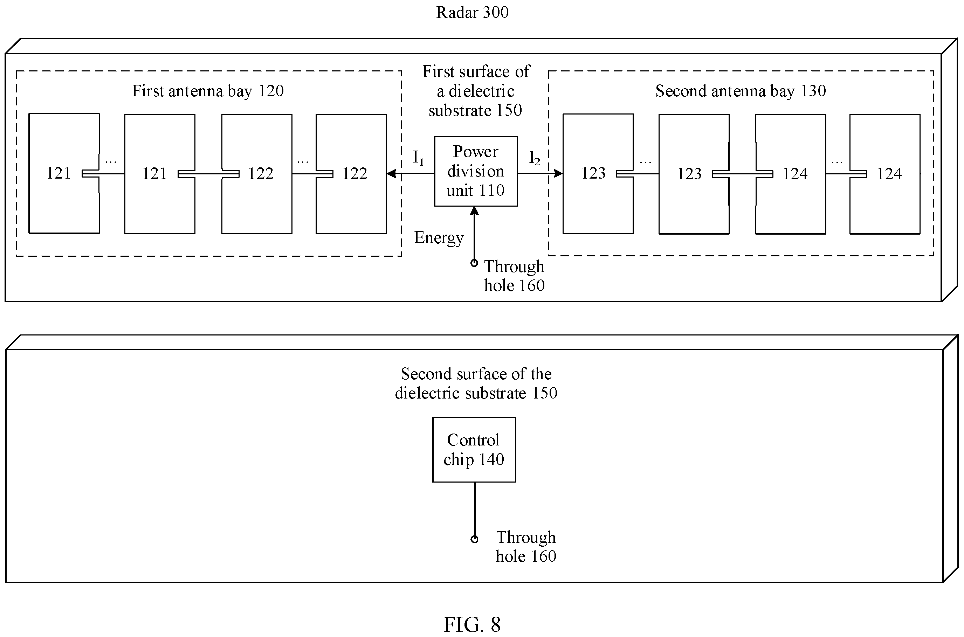

In another possible implementation, as shown in FIG. 8, the power division unit 110, the first antenna bay 120, and the second antenna bay 130 may be disposed on a first surface of the dielectric substrate 150, and the control chip 140 may be disposed on a second surface of the dielectric substrate 150. The first surface is disposed opposite to the second surface.

Optionally, the power division unit 110 on the first surface of the dielectric substrate 150 may be connected, in a plurality of manners, to the control chip 140 disposed on the second surface of the dielectric substrate 150. This is not limited in this embodiment of this application.

In a possible implementation, as shown in FIG. 8, a through hole 160 may be disposed on the dielectric substrate 150. The control chip 140 is connected to the power division unit 110 through a third microstrip and the through hole 160, and provides energy for the power division unit 110.

In another possible implementation, in the through hole 160 shown in FIG. 8, a conductor may be formed by casting a conductive solution. The control chip 140 is connected, through a third microstrip, to a surface of the conductor on the first surface of the dielectric substrate 150, and the power division unit 110 is connected, through a fourth microstrip, to a surface of the conductor on the second surface of the dielectric substrate 150. In this way, the control chip 140 is connected to the power division unit 110.

Optionally, the radar 300 may further include the antenna structure 200 shown in FIG. 2 and a control chip 140. The control chip 140 is connected to an input end of the power division unit 210. The control chip 140 is configured to control the antenna structure 200 to receive and send a signal. To avoid repetition, details are not described herein again.

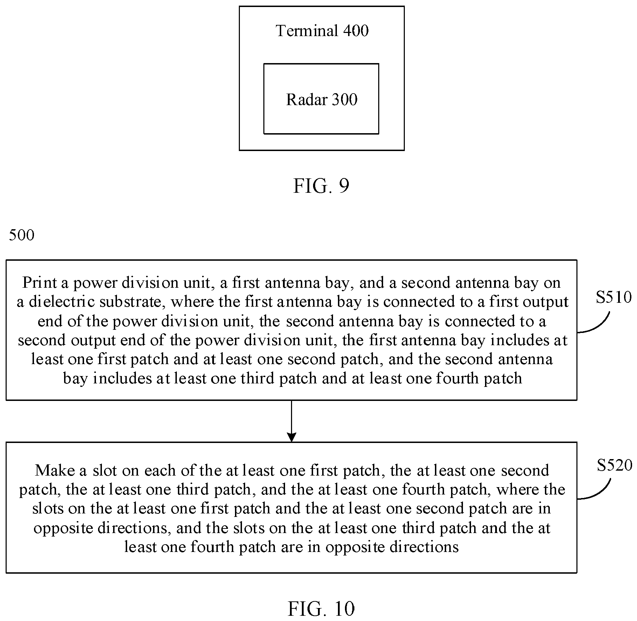

FIG. 9 shows a terminal 400 according to an embodiment of this application. The terminal 400 includes the radar 300 shown in FIG. 7 or FIG. 8.

Optionally, the terminal in this embodiment of this application may have a capability of implementing a communication function and/or a detection function by using a radar. This is not limited in this embodiment of this application.

In a possible implementation, the terminal may be a vehicle in autonomous driving or intelligent driving.

In another possible implementation, the terminal may be a mobile phone (mobile phone), a tablet computer (Pad), a computer with a wireless transceiver function, a virtual reality (Virtual Reality, VR) terminal, an augmented reality (Augmented Reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

The foregoing shows, with reference to FIG. 1 to FIG. 9, the antenna structure and the radar provided in embodiments of this application. The following describes, in detail with reference to FIG. 10, an antenna structure preparation method provided in an embodiment of this application.

FIG. 10 shows an antenna structure preparation method 500 according to an embodiment of this application.

S510: Print a power division unit, a first antenna bay, and a second antenna bay on a dielectric substrate, where the first antenna bay is connected to a first output end of the power division unit, the second antenna bay is connected to a second output end of the power division unit, the first antenna bay includes at least one first patch and at least one second patch, and the second antenna bay includes at least one third patch and at least one fourth patch.

Optionally, the dielectric substrate is a multilayer hybrid board, that is, the dielectric substrate includes a multilayer board, where a top layer of the multilayer board is made of a metal material.

In a possible implementation, S510 may be printing the power division unit, the first antenna bay, and the second antenna bay on the top layer of the dielectric substrate.

S520: Make a slot on each of the at least one first patch, the at least one second patch, the at least one third patch, and the at least one fourth patch, where the slots on the at least one first patch and the at least one second patch are in opposite directions, and the slots on the at least one third patch and the at least one fourth patch are in opposite directions.

In a possible implementation, a quantity of the at least one first patch is the same as a quantity of the at least one fourth patch, a quantity of the at least one second patch is the same as a quantity of the at least one third patch, and the at least one first patch, the at least one second patch, the at least one third patch, and the at least one fourth patch are arranged in a straight line.

Optionally, a quantity of the at least one first patch may be the same as a quantity of the at least one fourth patch, and a quantity of the at least one second patch may be the same as a quantity of the at least one third patch.

In a possible implementation, there may be one first patch and one fourth patch, and there may be a plurality of second patches and a plurality of third patches. In other words, in each antenna bay, there is one load patch, and there are a plurality of radiation patches.

Optionally, patches (the at least one first patch and the at least one second patch) in the first antenna bay and the power division unit may be arranged in a first straight line, and patches (the at least one third patch and the at least one fourth patch) in the second antenna bay and the power division unit may be arranged in a second straight line. There is an included angle between the first straight line and the second straight line, and the included angle may be greater than a first angle threshold and less than or equal to a second angle threshold.

In a possible implementation, the at least one first patch is at least one patch that is in the first antenna bay and that is farthest from the power division unit, and the at least one fourth patch is at least one patch that is in the second antenna bay and that is farthest from the power division unit.

Optionally, S520 may be making a slot at an edge that faces a side of the power division unit and that is of each of the at least one first patch and the at least one third patch, and making a slot at an edge that is away from a side of the power division unit and that is of each of the at least one second patch and the at least one fourth patch.

In a possible implementation, the making a slot at an edge that faces a side of the power division unit and that is of each of the at least one first patch and the at least one third patch includes: making the slot at a middle location at the edge that faces the side of the power division unit and that is of each of the at least one first patch and the at least one third patch.

In a possible implementation, the making a slot at an edge that is away from a side of the power division unit and that is of each of the at least one second patch and the at least one fourth patch includes: making the slot at a middle location at the edge that is away from the side of the power division unit and that is of each of the at least one second patch and the at least one fourth patch.

Optionally, in this embodiment of this application, a slot on each patch may have a plurality of surface shapes. This is not limited in this embodiment of this application.

In a possible implementation, surface shapes of the slots on the at least one first patch, the at least one second patch, the at least one third patch, and the at least one fourth patch are rectangles.

Optionally, sizes of the at least one first patch, the at least one second patch, the at least one third patch, and the at least one fourth patch are the same.

It should be noted that in this embodiment of this application, that sizes are the same includes that the sizes are exactly the same and are approximately the same. That the sizes are approximately the same means that a difference between sizes of patches is within a specific error range.

In a possible implementation, distances between patches in each of the first antenna bay and the second antenna bay are the same.

It should be noted that in this embodiment of this application, that distances are the same includes that the distances are exactly the same and are approximately the same. That the distances are approximately the same means that a difference between distances between patches is within a specific error range.

According to the antenna structure provided in this embodiment of this application, the first antenna bay and the second antenna bay include a same total quantity of patches, sizes of the patches are the same, and distances between the patches are the same. The first antenna bay and the second antenna bay include a same quantity of patches that implement different functions (a load function and a radiation function), locations of the patches are symmetric, and slots on the patches are in symmetric directions. This can reduce processing and implementation difficulties.

In addition, the first antenna bay and the second antenna bay are approximately symmetrically disposed on two sides of the power division unit. This may mean that the first antenna bay and the second antenna bay are disposed in parallel, and patches in the first antenna bay and the second antenna bay are disposed in series. A serial-parallel hybrid feeding structure is used, to avoid a problem that an antenna beam direction deflects with a frequency and a side lobe level deteriorates with a frequency.

According to the antenna structure provided in this embodiment of this application, a beam direction deflection range of + 0.1°, an E-plane SLL that is less than -15 dB, and a bandwidth of 2.2 GHz (ranging from 76.9 GHz to 79.1 GHz) can be implemented.

It should be understood that sequence numbers of the foregoing processes do not mean execution sequences in embodiments of this application. The execution sequences of the processes should be determined based on functions and internal logic of the processes, and should not be construed as any limitation on the implementation processes of the embodiments of this application.

A person of ordinary skill in the art may be aware that, units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

Aperson skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate. Parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna structure, comprising a power division unit, a first antenna bay, and a second antenna bay, wherein the first antenna bay is connected to a first output end of the power division unit, and the second antenna bay is connected to a second output end of the power division unit; and
the first antenna bay comprises at least one first patch provided with a slot and at least one second patch provided with a slot, and the second antenna bay comprises at least one third patch provided with a slot and at least one fourth patch provided with a slot, wherein the slots on the at least one first patch and the at least one second patch are in opposite directions, and the slots on the at least one third patch and the at least one fourth patch are in opposite directions.

2. The antenna structure according to claim 1, wherein a quantity of the at least one first patch is the same as a quantity of the at least one fourth patch, a quantity of the at least one second patch is the same as a quantity of the at least one third patch, and the at least one first patch, the at least one second patch, the at least one third patch, and the at least one fourth patch are arranged in a straight line.

3. The antenna structure according to claim 2, wherein the at least one first patch is at least one patch that is in the first antenna bay and that is farthest from the power division unit, and the at least one fourth patch is at least one patch that is in the second antenna bay and that is farthest from the power division unit.

4. The antenna structure according to claim 3, wherein the slot on the at least one first patch is disposed at an edge facing a side of the power division unit, and the slot on the at least one fourth patch is disposed at an edge facing a side of the power division unit.

5. The antenna structure according to claim 4, wherein the slot on the at least one first patch is disposed at a middle location at the edge facing the side of the power division unit, and the slot on the at least one fourth patch is disposed at a middle location at the edge away from the side of the power division unit.

6. The antenna structure according to any one of claims 1 to 5, wherein surface shapes of the slots on the at least one first patch, the at least one second patch, the at least one third patch, and the at least one fourth patch are rectangles.

7. The antenna structure according to any one of claims 1 to 6, wherein sizes of the at least one first patch, the at least one second patch, the at least one third patch, and the at least one fourth patch are the same.

8. The antenna structure according to any one of claims 1 to 7, wherein distances between patches in each of the first antenna bay and the second antenna bay are the same.

9. The antenna structure according to any one of claims 1 to 8, wherein the antenna structure is a receive antenna or a transmit antenna.

10. A radar, wherein the radar comprises the antenna structure according to any one of claims 1 to 9.

11. The radar according to claim 10, wherein the radar further comprises a control chip, the control chip is connected to an input end of the power division unit, and the control chip is configured to control the antenna structure to transmit or receive a signal.

12. The radar according to claim 11, wherein the radar further comprises a dielectric substrate, and the power division unit, the first antenna bay, the second antenna bay, and the control chip are disposed on a same surface of the dielectric substrate.

13. The radar according to claim 11, wherein the radar further comprises a dielectric substrate, the power division unit, the first antenna bay, and the second antenna bay are disposed on a first surface of the dielectric substrate, the control chip is disposed on a second surface of the dielectric substrate, and the first surface is disposed opposite to the second surface.

14. A terminal, wherein the terminal comprises the radar according to any one of claims 10 to 13.

15. The terminal according to claim 14, wherein the terminal is a vehicle.
